# FASCICULE DE BREVET EUROPEEN

(11) **EP 3 735 357 B1**
(45) Date de publication et mention de la délivrance du brevet: **05.04.2023**
(21) Numéro de dépôt: 18839825.9
(22) Date de dépôt: 13.12.2018
(51) Int. Cl.: B60K 13/06, B60H 1/00, B60H 1/24, B62D 1/16

(54) **ENSEMBLE D'UNE PLANCHE DE BORD, D'UN BRIN DE COLONNE ET D'UN CONDUIT D'AIR**
BAUGRUPPE AUS EINEM ARMATURENBRETT, EINEM SÄULENSTRANG UND EINEM LUFTKANAL
ASSEMBLY OF A DASHBOARD, A COLUMN STRAND AND AN AIR DUCT

(30) Priorité: 05.01.2018 FR 1850074
(43) Date de publication de la demande: 11.11.2020
(73) Titulaire: PSA Automobiles SA, 78300 Poissy (FR)
(72) Inventeur: MITOUART, Jean Guy, 77310 Pringy (FR)
(86) Numéro de dépôt international: PCT/FR2018/053248
(87) Numéro de publication internationale: WO 2019/135037

(56) Documents cités:
- DE-A1-102011 007 668
- JP-A- S61 166 718
- US-A- 5 503 431
- US-A1- 2005 151 361
- US-B1- 6 629 424
- US-B2- 6 497 432
- US-B2- 6 497 432

## Description

La présente invention se rapporte au domaine de l'assemblage des véhicules automobiles. Elle concerne plus particulièrement l'étape de montage de la planche de bord au sein de l'habitacle d'un véhicule en cours d'assemblage.
Le document US6497432 décrit une colonne de direction fixée à un conduit d'air structurel par l'ensemble de fixation 1.

Avant d'être montée dans l'habitacle d'un véhicule, la planche de bord est généralement prééquipée d'une colonne de direction, dont un premier brin, fixé à la planche de bord, est destiné à être connecté à un volant, tandis qu'un deuxième brin, laissé provisoirement libre, est destiné à être raccordé à la crémaillère de direction commandant les roues du véhicule automobile.

Lors du montage de la planche de bord, il est nécessaire de s'assurer que le brin libre de la colonne ne risque pas de percuter des éléments d'aspect de l'habitacle ou encore des éléments déjà présents, tels que le pédalier. Il est ainsi généralement prévu d'immobiliser temporairement le brin libre de la colonne de direction. Il est connu à cet effet de relier le brin libre de la colonne de direction au corps de la planche de bord, par exemple au moyen d'un élastique ou d'une patte sécable solidaire du corps de planche. Ces deux solutions présentent toutefois l'inconvénient de générer des déchets qui doivent être recyclés une fois que le brin libre de la colonne de direction est libéré. En outre, ces solutions ne sont pas suffisamment fiables, par exemple parce qu'il arrive que la patte sécable soit rompue accidentellement avant même le montage de la planche de bord.

La présente invention a pour but de remédier aux inconvénients de l'état de la technique, et plus particulièrement ceux ci-dessus exposés, en proposant un dispositif permettant de maintenir temporairement, de manière fiable et simple, le brin de la colonne de direction laissé libre lors du montage de la planche de bord.

A cet effet, l'invention concerne un ensemble selon la revendication indépendante 1.

D'autres aspects potentiels de l'invention sont définis par l'objet des revendications dépendantes 2-5.

L'invention concerne également un véhicule automobile comportant au moins un ensemble selon l'une des revendications 1-5.

La présente invention sera mieux comprise à la lecture de la description détaillée qui suit, faite en référence aux dessins annexés, dans lesquels :
- la figure 1 représente une vue latérale en coupe d'une planche de bord d'un véhicule automobile, le véhicule étant équipé d'un conduit d'air conforme à l'invention ;
- les figures 2a, 2b, et 2c représentent différentes vues du conduit d'air de la figure 1 ;
- la figure 3 est une vue montrant un brin libre de colonne de direction maintenu par un conduit d'air conforme à l'invention.

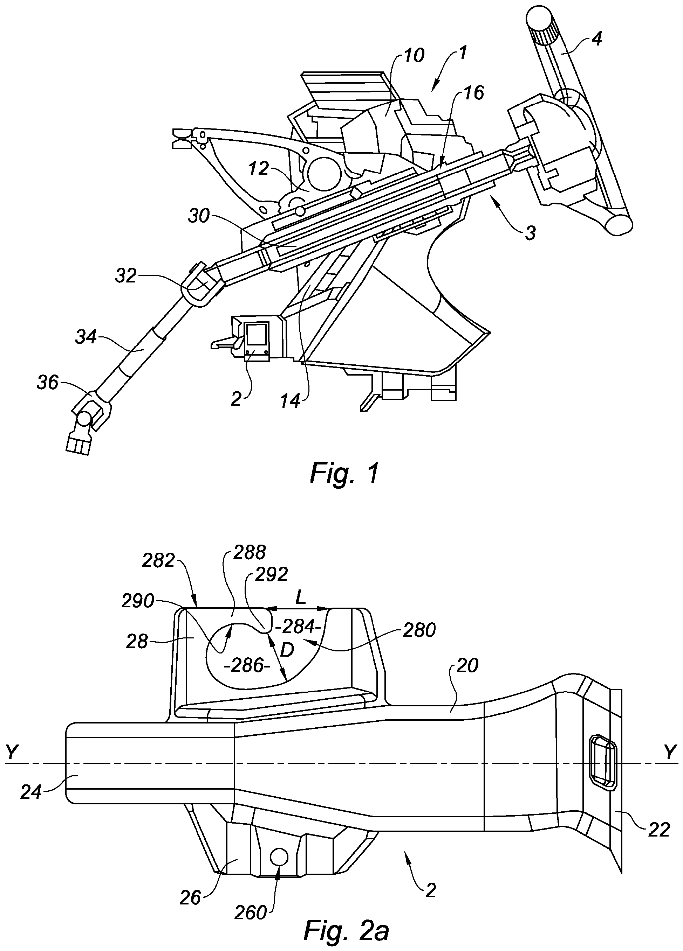

La figure 1 représente une vue latérale en coupe d'une planche de bord 1 de véhicule automobile, derrière laquelle est disposé un conduit d'air 2 conforme à la présente invention. La planche de bord 1 de véhicule automobile comporte une partie supérieure 10, supportée par une traverse 12 et destinée notamment à accueillir les divers dispositifs d'affichage utiles pour la conduite du véhicule. La planche de bord 1 comporte une partie inférieure 14, couramment dénommée retour, conformée pour laisser passer les jambes du conducteur et pour donner accès au pédalier du véhicule (non visible sur la figure 1). La planche de bord 1 comporte par ailleurs un passage 16 définissant un espace accueillant une colonne de direction 3. La colonne de direction 3 comporte un premier brin 30 fixé à la planche de bord 1 et à la traverse 12, et est équipée d'un volant 4. La colonne de direction 3 comprend une première articulation 32, de type joint de cardan, reliant le premier brin 30 à un deuxième brin 34. La colonne de direction 3 comporte une deuxième articulation 36, également de type joint de cardan, permettant de relier le deuxième brin 34 aux éléments de direction commandant les roues du véhicule automobile, tels qu'une crémaillère de direction (non visible sur la figure 1). Durant le montage de la planche de bord 1 sur la caisse d'un véhicule automobile, la deuxième articulation 36 du deuxième brin 24 n'est pas encore fixée aux éléments de direction du véhicule et le deuxième brin 24 de la colonne de direction 3 est ainsi libre, du fait de la première articulation 32, par rapport au premier brin 30 qui est fixé à la planche de bord 1.

Le conduit d'air 2 est disposé derrière la planche de bord par rapport au conducteur et est donc dissimulé à la vue du conducteur par la planche de bord 1. Le conduit d'air 2 est destiné à amener l'air provenant du système de climatisation (ou, le cas échéant, du système de ventilation) vers la zone basse de l'habitacle, côté conducteur, c'est-à-dire au niveau des pieds du conducteur. Lors de l'assemblage d'un véhicule, le conduit d'air 2 est fixé à la planche de bord préalablement à l'installation de celle-ci dans le véhicule.

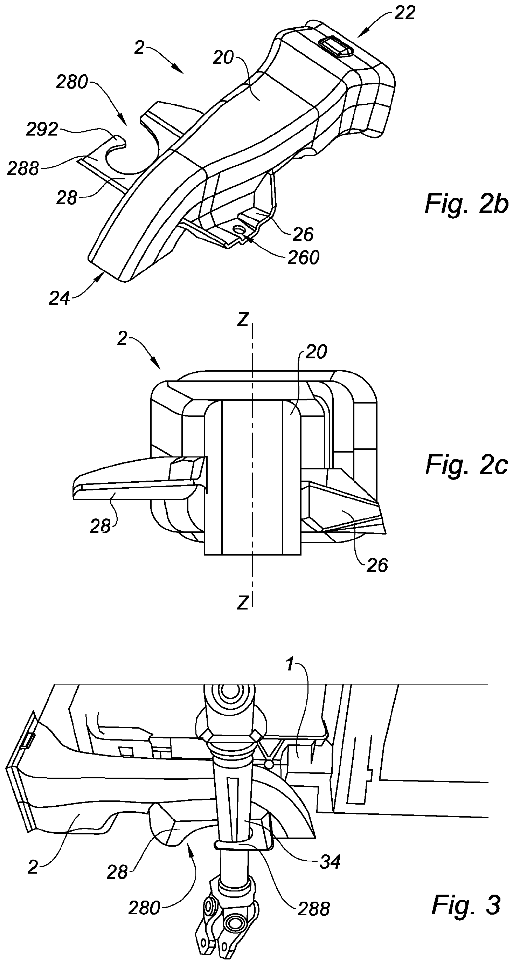

On décrit ci-après le conduit d'air 2 conforme à l'invention, en relation avec les figures 2a à 2c. Le conduit d'air 2 comporte un corps 20, creux et allongé selon un axe longitudinal Y-Y. Le corps 20 forme une canalisation d'air dont une extrémité 22 est destinée à être connectée à un dispositif (ou groupe) de climatisation. L'extrémité opposée 24 du corps 20 constitue une sortie pour l'air en provenance du groupe de climatisation et est destinée à être disposée en zone basse de l'habitacle, à proximité des pieds du conducteur.

Le conduit d'air 2 est destiné à être fixé à la planche de bord 1 et comporte à cet effet une patte de fixation 26. La patte de fixation 26 comporte un trou de fixation 260, permettant l'utilisation d'un moyen de fixation tel qu'une agrafe de fixation ou un rivet plastique.

Du côté opposé à la patte de fixation 26, le conduit d'air 2 comporte une patte de retenue 28, destinée à permettre la rétention du deuxième brin 34 de la colonne de direction 3, c'est-à-dire le brin laissé libre lors du montage de la planche de bord 1 dans l'habitacle d'un véhicule. A cet effet, la patte de retenue 28 comporte une encoche 280, ouverte au niveau d'un bord longitudinal 282 libre de la patte de retenue. L'encoche 280 est conformée de manière à permettre l'insertion et la retenue du deuxième brin de la colonne de direction. L'encoche 280 présente dans l'exemple une forme générale en virgule. L'encoche 280 comporte deux secteurs adjacents : une entrée 284, ouverte sur le bord longitudinal 282 de la patte de retenue 28, et une zone de retenue 286, communiquant uniquement l'entrée 284.

L'entrée 284 de l'encoche 280 est conformée de manière à permettre l'insertion et l'extraction d'un brin colonne de direction. L'extrémité ouverte de l'entrée 284 présente une largeur L (au niveau du bord longitudinal 282) compatible avec l'insertion d'un brin de colonne de direction. Dans l'exemple la largeur L est comprise entre 22,5 et 23,5 millimètres, et notamment égale à 22,9 millimètres. La zone de retenue 286 est délimitée notamment par une languette de retenue 288, allongée selon une direction sensiblement parallèle à l'axe longitudinal Y-Y du corps 20, et formant un retour permettant la retenue d'un brin de colonne de direction inséré dans l'encoche 280. Un bord extérieur de la languette de retenue 288 est constitué par une portion du bord longitudinal 282 libre de la patte de retenue 28. Le bord opposé, ou bord intérieur 290, de la languette de retenue 288 présente une forme concave. En outre, la languette de retenue 288 comporte à son extrémité libre un renflement 292. Le renflement 292 est dimensionné de manière que la distance D avec le bord opposé de l'encoche 280 soit inférieure ou égale à la largeur du brin de colonne de direction qu'il est prévu d'insérer. Ainsi, le renflement 292 permet de générer un point dur lors de l'insertion (et lors de l'extraction) d'un brin de colonne de direction, point dur qui pourra être dépassé grâce à l'élasticité de la languette de retenue 288. Grâce au renflement 292, on s'assure qu'un brin de colonne de direction inséré dans la zone de retenue 286 ne puisse pas s'extraire spontanément. Dans l'exemple, la distance D est comprise entre 20,5 et 21,5 millimètres, et notamment égale à 20,9 millimètres.

Avantageusement, comme visible sur les figures 2a à 2c, la patte de retenue 28 est disposée à proximité immédiate, voire en regard de la patte de fixation 26, que ce soit selon l'axe longitudinal Y-Y (figure 2a) ou selon l'axe vertical Z-Z (figure 2c). On évite ainsi que les efforts générés par la retenue d'un brin de colonne de direction n'impliquent pas des efforts de flexion ou de torsion susceptibles d'endommager la fixation du conduit d'air 2 sur la planche de bord 1.

La figure 3 montre un brin de colonne de direction, tel que le deuxième brin 34 de la figure 1, maintenu dans le conduit d'air 2 conforme à l'invention. Comme expliqué plus haut, le deuxième brin 34 de la colonne de direction 3 est, après insertion par un opérateur, retenu par la languette de retenue 288. En particulier, la forme concave du bord intérieur 290 de la languette de retenue 288, ainsi que le renflement 292 présent sur cette dernière permettent d'éviter toute extraction spontanée du brin de la colonne de direction.

Comme on l'a vu, le conduit d'air conforme à l'invention permet la retenue temporaire d'un brin de colonne de direction de manière fiable et précise. Grâce à l'invention, on est en mesure d'assurer ce maintien sans pièce supplémentaire, et sans déchets à récupérer en fin de montage.

## Revendications

1. Ensemble d'une planche de bord (1) de véhicule automobile, d'un brin de colonne, et d'un conduit d'air (2) destiné à être fixé à la planche de bord (1), le conduit d'air (2) comportant un corps (20) allongé selon un axe longitudinal (Y-Y) et formant une canalisation d'air, le conduit d'air (2) comporte une patte de retenue (28) sur laquelle est ménagée une encoche (280), l'encoche (280) comportant une entrée (284) ouverte au niveau d'un bord longitudinal (282) libre de la patte de retenue (28) permettant l'insertion du brin de colonne de direction dans l'encoche (28) et formant un passage vers une zone de retenue (286), la zone de retenue (286) étant délimitée par une languette de retenue (288) allongée selon une direction sensiblement parallèle à l'axe longitudinal (Y-Y) du corps (20), **caractérisé en ce que** la languette de retenue (288) forme un retour permettant la retenue d'un brin de colonne de direction inséré dans l'encoche (280), de sorte à permettre la retenue du brin de colonne (34) de direction laissé libre lors du montage de la planche de bord, et comporte, à son extrémité libre, un renflement (292), conformé de manière à générer un point dur lors du passage d'un brin de colonne de direction de l'entrée (284) vers la zone de retenue (286) et inversement.

2. L'ensemble selon la revendication précédente, dans lequel le renflement (292) est tel que la distance (D) entre l'extrémité libre de la languette de retenue (288) et le bord opposé de l'encoche (280) est inférieure ou égale à la dimension du brin de direction que le conduit d'air (2) est destiné à retenir.

3. L'ensemble selon l'une des revendications 1 et 2, dans lequel la languette de retenue (288) est apte à être déformée élastiquement lors du passage d'un brin de direction pour dépasser le point dur généré par le renflement (292).

4. L'ensemble selon l'une des revendications 1 à 3, dans lequel la languette de retenue (288) présente un bord extérieur, constitué par une portion du bord longitudinal (282) libre de la patte de retenue (28), et un bord intérieur (290) de forme concave.

5. L'ensemble selon l'une des revendications précédentes, le conduit d'air (2) comportant une patte de fixation (26) à une planche de bord (1) d'un véhicule automobile, la patte de retenue (28) étant disposé à proximité immédiate ou en regard de la patte de fixation (26) selon la direction de l'axe longitudinal (Y-Y) du corps (20) du conduit d'air (2).

6. Véhicule automobile comportant au moins un ensemble (2) selon l'une des revendications 1 à 5.

## Patentansprüche

1. Kombination aus einem Armaturenbrett (1) eines Kraftfahrzeugs, einem Säulenstrang und einem Luftkanal (2) zur Befestigung am Armaturenbrett (1), wobei der Luftkanal (2) einen Körper (20) aufweist, der entlang einer Längsachse (Y-Y) langgestreckt ist und eine Luftleitung bildet, wobei der Luftkanal (2) eine Haltelasche (28) aufweist, an der eine Kerbe (280) ausgebildet ist, wobei die Kerbe (280) einen Einlass (284) aufweist, der an einem Längsrand offen ist (282) frei von der Haltelasche (28), die das Einführen des Lenksäulenstrangs in die Kerbe (28) ermöglicht und einen Durchgang zu einem Haltebereich (286) bildet, wobei der Haltebereich (286) durch eine Haltelasche (288) begrenzt ist, die in einer Richtung im Wesentlichen parallel zur Längsachse (Y-Y) des Körpers (20) verlängert ist, **dadurch gekennzeichnet, dass** die Haltelasche (288) eine Rückführung bildet, die das Halten eines in die Kerbe eingeführten Lenksäulenstrangs ermöglicht (280) vorgesehen ist, um das Zurückhalten des bei der Montage des Armaturenbrettes freigelassenen Lenksäulenstranges (34) zu ermöglichen, und an seinem freien Ende eine Wulst (292) aufweist, die so ausgebildet ist, dass sie beim Durchlaufen eines Lenksäulenstranges vom Einlass (284) zum Haltebereich (286) und umgekehrt einen harten Punkt erzeugt.

2. Anordnung nach dem vorhergehenden Anspruch, bei der die Verdickung (292) derart ist, dass der Abstand (D) zwischen dem freien Ende der Haltezunge (288) und dem gegenüberliegenden Rand der Kerbe (280) kleiner oder gleich der Abmessung des Lenkstrangs ist, den der Luftkanal (2) halten soll.

3. Anordnung nach einem der Ansprüche 1 und 2, bei der die Rückhaltezunge (288) elastisch verformbar ist, wenn ein Lenkstrang hindurchgeht, um den durch die Verdickung (292) erzeugten harten Punkt zu überwinden.

4. Anordnung nach einem der Ansprüche 1 bis 3, bei der die Rückhaltezunge (288) einen äußeren Rand, der aus einem Abschnitt des freien Längsrandes (282) der Rückhaltelasche (28) besteht, und einen konkav geformten inneren Rand (290) aufweist.

5. Anordnung nach einem der vorhergehenden Ansprüche, wobei der Luftkanal (2) eine Befestigungslasche (26) an einem Armaturenbrett (1) eines Kraftfahrzeugs aufweist, wobei die Haltelasche (28) in der Richtung der Längsachse (Y-Y) des Körpers (20) des Luftkanals (2) in unmittelbarer Nähe oder gegenüber der Befestigungslasche (26) angeordnet ist.

6. Kraftfahrzeug mit mindestens einer Baugruppe (2) nach einem der Ansprüche 1 bis 5.

## Claims

1. An assembly of a motor vehicle dashboard (1), a column strand, and an air duct (2) for attachment to the dashboard (1), the air duct (2) comprising a body (20) elongated along a longitudinal axis (Y-Y) and forming an air duct, the air duct (2) comprises a retaining tab (28) on which is provided a notch (280), the notch (280) comprising an inlet (284) open at a longitudinal edge (28) 2) free of the retaining tab (28) allowing the insertion of the steering column strand into the notch (28) and forming a passage towards a retaining zone (286), the retaining zone (286) being delimited by a retaining tab (288) elongated in a direction substantially parallel to the longitudinal axis (Y-Y) of the body (20), **characterized in that** the retaining tab (288) forms a return allowing the retention of a steering column strand inserted into the notch (280), so as to enable the steering column strand (34) to be retained when the dashboard is mounted, and comprises, at its free end, a bulge (292), shaped so as to generate a hard point when a steering column strand passes from the inlet (284) to the retaining zone (286) and vice versa.

2. The assembly according to the preceding claim, in which the bulge (292) is such that the distance (D) between the free end of the retaining tongue (288) and the opposite edge of the notch (280) is less than or equal to the dimension of the steering strand that the air duct (2) is intended to retain.

3. The assembly according to one of claims 1 and 2, in which the retaining tongue (288) is capable of being elastically deformed during the passage of a steering strand to exceed the hard point generated by the bulge (292).

4. The assembly according to one of claims 1 to 3, wherein the retaining tongue (288) has an outer edge, formed by a portion of the free longitudinal edge (282) of the retaining tab (28), and an inner edge (290) of concave shape.

5. The assembly according to one of the preceding claims, the air duct (2) comprising a lug (26) for fixing to a dashboard (1) of a motor vehicle, the retaining lug (28) being disposed in the immediate vicinity of or facing the fixing lug (26) in the direction of the longitudinal axis (Y-Y) of the body (20) of the air duct (2).

6. Motor vehicle comprising at least one assembly (2) according to one of Claims 1 to 5.
